(19) Europäisches Patentamt
European Patent Office
Office européen des brevets

(11) **EP 1 944 981 A1**

(12) **EUROPÄISCHE PATENTANMELDUNG**

(43) Veröffentlichungstag:
**16.07.2008  Patentblatt 2008/29**

(51) Int Cl.:
*H04N 7/52* *(2006.01)*       *H04N 7/56* *(2006.01)*
*H04N 5/08* *(2006.01)*

(21) Anmeldenummer: **07024294.6**

(22) Anmeldetag: **14.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **12.01.2007   DE 102007001843**

(71) Anmelder: **INOVA Semiconductors GmbH**
**81671 München (DE)**

(72) Erfinder:
• **Riedel, Michael**
  **81671 München (DE)**
• **Neumann, Roland**
  **81671 München (DE)**

(74) Vertreter: **Winter, Brandl, Fürniss, Hübner Röss, Kaiser,**
**Polte Partnerschaft Patent- und Rechtsanwaltskanzlei**
**Alois-Steinecker-Strasse 22**
**85354 Freising (DE)**

(54)    **Verfahren zum Verarbeiten von Bilddaten**

(57)    Die vorliegende Erfindung betrifft ein Verfahren zum Verarbeiten von in Bilddaten enthaltenen Steuerdaten für die Bildlage, mit den Schritten: a) Empfangen von Bilddaten, welche Bildpunktdaten für die Farbinformation und die dazugehörigen Steuerdaten für die Bildlage beinhalten, b) Ermitteln von Parametern der Bildrahmeninformation aus der Folge der Steuerdaten eines Bilds bzw. Halbbilds, wobei die Parameter in Verbindung mit einem Bildpunktdaten-Takt die jeweiligen Steuerdaten des Bilds bzw. Halbbilds im Zeitablauf bestimmen, c) Vergleichen der ermittelten Parameter mit Referenzparametern, d) Errzeugen von Steuerdaten des Bilds bzw. Halbbilds i) aus den empfangenen Steuerdaten oder den Referenzparametern, wenn sich die ermittelten Parameter des Bilds bzw. Halbbilds von den Referenzparametern in der Abfolge zweier oder mehrerer Bilder bzw. Halbbilder nicht unterschieden haben, ii) aus den Referenzparametern, wenn sich die ermittelten Parameter des Bilds bzw. Halbbilds von den Referenzparametern in der Abfolge mehrerer Bilder bzw. Halbbilder bis zu n-mal unterschieden haben, wobei n eine natürliche Zahl ist, oder iii) aus den empfangenen Steuerdaten oder den Referenzparametern, wenn sich die ermittelten Parameter des Bilds bzw. Halbbilds von den Referenzparametern in der Abfolge mehrerer Bilder bzw. Halbbilder mehr als n-mal unterschieden haben, wobei die Referenzparameter vor dem Erzeugen der Steuerdaten durch die ermittelten Parameter aktualisiert werden, wenn sich die ermittelten Parameter von den Referenzparametern in der Abfolge mehrerer Bilder bzw. Halbbilder mehr als n-mal unterschieden haben, und e) Erzeugen sowie Ausgeben von Bilddaten aus den im Schritt d) gebildeten Steuerdaten und den dazugehörigen Bildpunktdaten.

*FIG. 1*

**Beschreibung**

Die vorliegende Erfindung bezieht sich auf ein Verfahren zum Verarbeiten von Bilddaten, bei welchem die Auswirkungen von Übertragungsfehlern minimiert sind. Insbesondere bezieht sich die vorliegende Erfindung auf ein Verfahren zum Verarbeiten von in Bilddaten enthaltenen Steuerdaten für die Bildlage bzw. von in Bilddaten enthaltenen Parametern der Bildrahmeninformation.

In der Bildverarbeitungstechnik wird üblicherweise ein Bild in eine Vielzahl von Bildpunkten, im Folgenden auch als Pixel bezeichnet, zerlegt, wobei sich die Bilddaten aus Steuerdaten für die Bildlage und Bildpunktdaten für die Farbinformation eines jeden Bildpunkts zusammensetzen. Im Folgenden werden die Bildpunktdaten als Pixel-Data oder Bildfarbinformation und die Steuerdaten für die Bildlage als Pixel-Control-Data oder Bildrahmeninformation bezeichnet. Ein Bild besteht aus einer Matrix (Zeilen, Spalten) von Bildpunkten. Die jeweiligen Bildpunkte bzw. deren Bildpunktdaten werden einzeln, sequentiell, Zeile für Zeile nacheinander übertragen. Zur zeitlichen Steuerung gibt es einen Bildpunktdaten-Takt (Pixel-Clock). Die Lage eines Bildpunkts ergibt sich aus der Anzahl von Bildpunktdaten-Taktflanken in Bezug zu den Flanken der Steuerdaten für die Bildlage. Übliche Signale, welche die Steuerdaten für die Bildlage darstellen, sind HSYNC, VSYNC und DE (Data-Enable), wobei die Signale HSYNC durch den willkürlich festgelegten Zustand L (Low), welcher dem Zustand 0 (null) entspricht, den Beginn einer neuen Zeile, VSYNC durch den willkürlich festgelegten Zustand L den Beginn eines neuen Bilds und DE durch den willkürlich festgelegten Zustand L angeben, dass die zugehörigen Pixel-Data noch nicht gültig sind. Da für den Wechsel zwischen zwei aufeinanderfolgenden Zeilen weniger Zeit als für den Wechsel zweier aufeinanderfolgender Bilder veranschlagt wird, ist die Zeitdauer des Signals DE für den Wechsel zwischen zwei aufeinanderfolgenden Zeilen kleiner als diejenige des Signals DE für den Wechsel zwischen zwei aufeinanderfolgenden Bildern. Während eines Bildpunktdaten-Takts werden die Bilddaten für einen Bildpunkt übertragen.

Die Übertragung von Bilddaten zwischen einem Sender und einem Empfänger ist diversen Einflüssen wie beispielsweise denjenigen von elektrischen oder elektromagnetischen Störsignalen bzw. Störfeldern oder Einflüssen von zeitweilig gebildeten parasitären Bauelementen bzw. Schaltungskomponenten unterworfen, wodurch bei den übertragenen Bildpunktdaten Fehler auftreten können. Sind bei einer fehlerbehafteten Übertragung von Bilddaten lediglich die Bildpunktdaten für die Farbinformation betroffen, wirken sich derartige Fehler nur auf die betroffenen Bildpunkte aus und werdem demzufolge vom Betrachter kaum wahrgenommen. Anders verhält es sich bei Fehlern, die bei den Steuerdaten für die Bildlage auftreten. Derartige Fehler wirken sich auf das ganze Bild aus und werden vom Betrachter beispielsweise als Bildflackern oder Bildunterbrechung stark wahrgenommen.

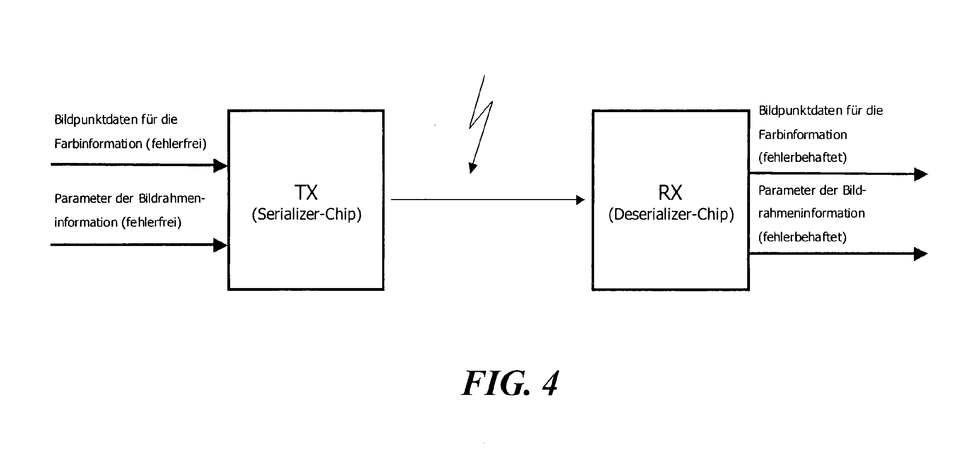

Fig. 4 zeigt ein Blockschaltbild eines herkömmlichen Systems zur Übertragung von Bilddaten, welches einen Sender TX (Serializer-Chip), der zum seriellen Übertragen von Bilddaten geeignet ist, und einen Empfänger RX (Deserializer-Chip) aufweist, der zum seriellen Empfangen von digitalen Bilddaten geeignet ist. Die Bilddaten werden fehlerfrei dem Sender TX parallel getrennt nach Farbinformation und Bildrahmeninformation zugeführt, einer Parallel-Serien-Umsetzung unterworfen und über eine Übertragungsstrecke dem Empfänger RX weitergeleitet, welcher die Bilddaten einer Serien-Parallel-Umsetzung unterwirft und sie wiederum parallel getrennt nach Farbinformation und Bildrahmeninformation ausgibt. Die Bildrahmeninformation besteht aus einem Satz von Parametern, welcher die periodischen Steuersignale bzw. Steuerdaten für die Bildlage in ihrem Aussehen und ihrer Lage zueinander beschreibt. In der Übertragungsstrecke sind die Bilddaten externen Einflüssen ausgesetzt, was zu einer fehlerbehaften Übertragung bzw. Ausgabe der Bildfarbinformation und/oder der Bildrahmeninformation führt.

Aufgabe der vorliegenden Erfindung ist es daher, ein Verfahren zum Verarbeiten von in Bilddaten enthaltenen Steuerdaten für die Bildlage bzw. von in Bilddaten enthaltenen Parametern der Bildrahmeninformation bereitzustellen, bei welchem die Auswirkungen von Übertragungsfehlern minimiert sind.

Die Lösung der Aufgabe erfolgt durch die Merkmale der unabhängigen Ansprüche.

Demgemäß wird ein Verfahren zum Verarbeiten von in Bilddaten enthaltenen Steuerdaten für die Bildlage bereitgestellt, mit den Schritten:

a) Empfangen von Bilddaten, welche Bildpunktdaten für die Farbinformation und die dazugehörigen Steuerdaten für die Bildlage beinhalten,

b) Ermitteln von Parametern der Bildrahmeninformation aus der Folge der Steuerdaten eines Bilds bzw. Halbbilds, wobei die Parameter in Verbindung mit einem Bildpunktdaten-Takt die jeweiligen Steuerdaten des Bilds bzw. Halbbilds im Zeitablauf bestimmen,

c) Vergleichen der ermittelten Parameter mit Referenzparametern,

d) Erzeugen von Steuerdaten des Bilds bzw. Halbbilds

i) aus den empfangenen Steuerdaten oder den Referenzparametern, wenn sich die ermittelten Parameter des Bilds bzw. Halbbilds von den Referenzparametern in der Abfolge zweier oder mehrerer Bilder bzw. Halbbilder nicht unterschieden haben,

ii) aus den Referenzparametern, wenn sich die ermittelten Parameter des Bilds bzw. Halbbilds von den Referenzparametern in der Abfolge mehrerer Bilder bzw. Halbbilder bis zu n-mal unterschieden haben, wobei n eine natürliche Zahl ist, oder

iii) aus den empfangenen Steuerdaten oder den Referenzparametern, wenn sich die ermittelten Parameter des Bilds bzw. Halbbilds von den Referenzparametern in der Abfolge mehrerer Bilder bzw. Halbbilder mehr als n-mal unterschieden haben,

wobei die Referenzparameter vor dem Erzeugen der Steuerdaten durch die ermittelten Parameter aktualisiert werden, wenn sich die ermittelten Parameter von den Referenzparametern in der Abfolge mehrerer Bilder bzw. Halbbilder mehr als n-mal unterschieden haben, und

e) Erzeugen sowie Ausgeben von Bilddaten aus den im Schritt d) gebildeten Steuerdaten und den dazugehörigen Bildpunktdaten.

Mit diesem Verfahren ist es einem Empfänger möglich, Bilddaten von einer beliebigen Quelle zu empfangen und Störungen der Steuerdaten für die Bildlage aufzuheben oder Änderungen des Formats bzw. der Auflösung der Bilddaten zu erkennen und eine entsprechende Anpassung durchzuführen. Aus den Steuerdaten für ein Bild bzw. Halbbild werden dabei Parameter der Bildrahmeninformation bestimmt, welche in Verbindung mit dem Bildpunktdaten-Takt den Zeitablauf der Steuerdaten festlegen. Die ermittelten Parameter werden in einem Plausibilitätscheck mit Referenzparametern verglichen. Wenn die einander gegenübergestellten Parameter gleich sind (Fall i), wird davon ausgegangen, dass keine Störung oder keine Änderung des Formats bzw. der Auflösung der Bilddaten vorliegt, und es werden die empfangenen Steuerdaten bzw. die daraus ermittelten Parameter oder die Referenzparameter, die einen entsprechenden bzw. den gleichen Informationsgehalt aufweisen, der weiteren Verarbeitung zu Grunde gelegt. Wenn die einander gegenübergestellten Parameter jedoch zueinander unterschiedlich sind, wird anfangs von einer Störung der Steuerdaten ausgegangen, es wird der Wert eines Zählers erhöht, und es werden die Referenzparameter anstelle der empfangenen Steuerdaten oder der ermittelten Parameter der weiteren Verarbeitung zu Grunde gelegt (Fall ii). Die Prozedur wird für jedes Bild bzw. Halbbild wiederholt, bis der Zähler einen Maximalwert von n überschritten hat, d.h. bis die einander gegenübergestellten Parameter mehr als n-mal in Folge zueinander unterschiedlich sind oder - anders ausgedrückt - bis die Störung der Steuerdaten für ein Bild bzw. Halbbild häufiger als n-mal aufgetreten ist (Fall iii). Da Störungen der Steuerdaten meist nicht sehr häufig auftreten, wird mit dem Überschreiten des Maximalwerts des Zählers von einer soeben erfolgten Änderung des Formats bzw. der Auflösung der Bilddaten ausgegangen, es wird der Wert des Zählers auf seinen Anfangswert von beispielsweise null zurückgesetzt, und es werden die Referenzparameter durch die zuletzt ermittelten Parameter ersetzt bzw. aktualisiert. Danach werden die empfangenen Steuerdaten bzw. die daraus ermittelten Parameter oder die Referenzparameter, die einen entsprechenden bzw. den gleichen Informationsgehalt aufweisen, der weiteren Verarbeitung zu Grunde gelegt (Fall iii).

In den Fällen i), ii) und iii) werden aus den der weiteren Verarbeitung zu Grunde gelegten Referenzparametern in Verbindung mit dem Bildpunktdaten-Takt die Steuerdaten des Bilds bzw. Halbbilds erzeugt, die wiederum mit den Bildpunktdaten für die Farbinformation verknüpft und ausgegeben werden. In den Fällen i) und iii) können alternativ die empfangenen Steuerdaten (bzw. Steuerdaten, die aus den ermittelten Parametern erzeugt wurden und demzufolge den empfangenen Steuerdaten entsprechen), die gleich den aus den Referenzdaten erzeugten Steuerdaten sind, mit den Bildpunktdaten für die Farbinformation zu Bilddaten verknüpft und ausgegeben werden. Somit wird ein Verfahren zum Verarbeiten von Bilddaten bereitgestellt, welchem es möglich ist, gegebenenfalls auftretende Störungen der Steuerdaten für die Bildlage aufzuheben oder Änderungen des Formats bzw. der Auflösung der Bilddaten zu erkennen und eine entsprechende Anpassung durchzuführen.

Des Weiteren wird ein Verfahren zum Verarbeiten von in Bilddaten enthaltenen Steuerdaten für die Bildlage bereitgestellt, mit den Schritten:

$a_1$) Senden von Bilddaten, welche Bildpunktdaten für die Farbinformation und die dazugehörigen Steuerdaten für die Bildlage beinhalten,
$a_2$) Empfangen der gesendeten Bilddaten,
b) Ermitteln von Parametern der Bildrahmeninformation aus der Folge der Steuerdaten eines Bilds bzw. Halbbilds, wobei die Parameter in Verbindung mit einem Bildpunktdaten-Takt die jeweiligen Steuerdaten des Bilds bzw. Halbbilds im Zeitablauf bestimmen,
c) Vergleichen der ermittelten Parameter mit Referenzparametern,
d) Erzeugen von Steuerdaten des Bilds bzw. Halbbilds

i) aus den empfangenen Steuerdaten oder den Referenzparametern, wenn sich die ermittelten Parameter des Bilds bzw. Halbbilds von den Referenzparametern in der Abfolge zweier oder mehrerer Bilder bzw. Halbbilder nicht unterschieden haben,

ii) aus den Referenzparametern, wenn sich die ermittelten Parameter des Bilds bzw. Halbbilds von den Referenzparametern in der Abfolge mehrerer Bilder bzw. Halbbilder bis zu n-mal unterschieden haben, wobei n eine natürliche Zahl ist, oder

iii) aus den empfangenen Steuerdaten oder den Referenzparametern, wenn sich die ermittelten Parameter des Bilds bzw. Halbbilds von den Referenzparametern in der Abfolge mehrerer Bilder bzw. Halbbilder mehr als n-mal unterschieden haben,

wobei die Referenzparameter vor dem Erzeugen der Steuerdaten durch die ermittelten Parameter aktualisiert werden, wenn sich die ermittelten Parameter von den Referenzparametern in der Abfolge mehrerer Bilder bzw. Halbbilder mehr als n-mal unterschieden haben, und

e) Erzeugen sowie Ausgeben von Bilddaten aus den im Schritt d) gebildeten Steuerdaten und den dazugehörigen Bildpunktdaten, und

f) Erzeugen einer Abfolge von Bildern auf der Grundlage der im Schritt e) ausgegebenen Bilddaten.

Mit diesem Verfahren ist es einem System bestehend aus Sender, Empfänger und Anzeigevorrichtung bzw. Display möglich, Bilddaten einer beliebigen Quelle von einem Sender auf einen Empfänger zu übertragen und gegebenenfalls Störungen der Steuerdaten aufzuheben oder Änderungen des Formats bzw. der Auflösung der Bilddaten zu erkennen und eine entsprechende Anpassung durchzuführen. Dabei werden Bilddaten von dem Sender dem Empfänger übertragen, welcher das oben beschriebene Verfahren durchführt. Abschließend werden die Bilddaten auf einer Anzeigevorrichtung als Bild oder als Abfolge von Bildern störungsfrei bzw. mit geändertem Format angezeigt.

Die oben beschriebenen Verfahren können dahingehend modifiziert werden, dass lediglich Bildpunktdaten für Farbinformation und Parameter der Bildrahmeninformation gesendet bzw. empfangen werden, welche den Bildpunktdaten für ein Bild bzw. Halbbild zugeordnet sind, wobei die empfangenen Parameter in Verbindung mit einem Bildpunktdaten-Takt Steuerdaten für ein Bild bzw. Halbbild im Zeitablauf bestimmen, welche mit den jeweiligen Bildpunktdaten verknüpft sind. Da nicht die Steuerdaten für jeden Bildpunkt sondern lediglich die Parameter für ein Bild bzw. Halbbild übertragen werden, wird die zu übertragende Bandbreite verringert, wodurch ein weiterer Vorteil erzielt wird.

Sind die Änderungen der ermittelten bzw. empfangenen Parameter der Bildrahmeninformation für das Bild bzw. Halbbild von den Referenzparametern in der Abfolge mehrerer Bilder bzw. Halbbilder mehr als n-mal gleich bzw. stabil oder konstant, wird davon ausgegangen, dass sich das Format bzw. die Auflösung der Bilddaten geändert hat, und es wird eine Anpassung der Steuerdaten anhand von derzeit ermittelten bzw. empfangenen Parametern durchgeführt. Erfolgen demgegenüber die Änderungen der ermittelten bzw. empfangenen Parameter für das Bild bzw. Halbbild von den Referenzparametern in der Abfolge mehrerer Bilder bzw. Halbbilder mehr als n-mal nicht auf die gleiche Weise, wird davon ausgegangen, dass eine zufällige Störung des Formats der Bilddaten aufgetreten ist, und es wird eine Anpassung der Steuerdaten für die Bildlage anhand von zuletzt ermittelten bzw. empfangenen und als fehlerfrei angesehenen Parametern durchgeführt.

Um die Störungssicherheit der Übertragung von Bilddaten weiter zu erhöhen, werden bei den oben bezeichneten Verfahren die Bilddaten vorzugsweise über Lichtleiter oder über elektrisch leitfähige Kabel übertragen.

Die Bilddaten können einerseits analog oder digital und andererseits parallel oder seriell übertragen werden, wodurch die Einsatzfähigkeit des erfindungsgemäßens Verfahrens erhöht wird.

Als besonders effektiv hat es sich herausgestellt, pro Bildpunktdaten-Takt Bildpunktdaten mit einer Farbtiefe von 10, 12, 18, 24 oder 30 Bit und Steuerdaten von 3 Bit (HSYNC, VSYNC, DE) zu übertragen. Bei Vorliegen von Steuerdaten von 3 Bit werden dabei in Verbindung mit dem Bildpunktdaten-Takt zwei mal vier Parameter pro Bild bzw. Halbbild ermittelt.

Ebenfalls als besonders effektiv hat es sich herausgestellt, den Wert für n derart festzulegen, dass die Beziehung $10 \leq n \leq 200$ und insbesondere $50 \leq n \leq 60$ erfüllt wird.

Durch eine geeignete Initialisierung der Referenzparameter (auch als Referenzparameter der Bildrahmeninformation bezeichnet) durch einen Satz von Parametern, welcher einem vorbestimmten Format der Bilddaten oder dem zuletzt aktualisierten Satz von Referenzparametern entspricht, kann die Zeit verringert werden, die benötigt wird, um ungestörte Bilddaten zu erzeugen.

Die vorliegende Erfindung wird anhand einer bevorzugten Ausführungsform der vorliegenden Erfindung in Verbindung mit einer Zeichnung beschrieben, wobei

Fig. 1 ein allgemeines Blockschaltbild eines Empfängers des Systems zur Übertragung von Bilddaten einer ersten Ausführungsform der vorliegenden Erfindung zeigt,

Fig. 2 ein detailliertes Blockschaltbild eines Senders und Empfängers des Systems zur Übertragung von Bilddaten einer zweiten Ausführungsform der vorliegenden Erfindung zeigt,

Fig. 3 den typischen Zeitablauf der Steuerdaten für die Bildlage zur Ermittlung von zwei mal vier Parametern der Bildrahmeninformation zeigt, und

Fig. 4 ein Blockschaltbild eines herkömmlichen Systems zur Übertragung von Bilddaten zeigt.

Im Folgenden wird eine erste Ausführungsform der vorliegenden Erfindung beschrieben.

Die vorliegende Erfindung betrifft ein Verfahren zum Verarbeiten von Bilddaten, insbesondere ein Verfahren zum Verarbeiten von in Bilddaten enthaltenen Steuerdaten für die Bildlage bzw. von in Bilddaten enthaltenen Parametern der Bildrahmeninformation, bei welchem die Auswirkungen von Übertragungsfehlern minimiert sind, und findet Anwendung beispielsweise in der rauhen, einer Vielzahl von Störsignalen oder Störfeldern unterworfenen Umgebung eines Kraftfahrzeugs, bei dem Bilddaten beispielsweise von einem Navigationsgerät, einem DVD-Player oder einer Kamera bzw. einem Camcorder auf ein Display übertragen werden, wobei lediglich kurze Strecken von bis zu etwa 10 m zwischen Sender und Empfänger zu überbrücken sind. Eine weitere Anwendung findet sich im Consumer-Bereich, wobei beispielsweise Bilddaten von einem Videorekorder oder DVD-Player einem Beamer über eine Strecke von bis zu etwa 30 m übermittelt werden können. Des Weiteren ist eine Anwendung des Verfahrens im industriellen Bereich in einem Kaufhaus zur Bildübertragung zwischen einem PC oder einer sonstigen Videoansteuerung und einem Display für Werbung oder für sonstige Informationen, oder in einem Bahnhof zur Bildübertragung zwischen einem Rechner und einem Serviceautomaten denkbar.

Die Bilddaten werden von einem Sender auf einen Empfänger pro zu übertragendes Bild in einer bestimmten Auflösung, beispielsweise in dem VGA-Modus mit der Auflösung von 640 x 480 übermittelt. Pro Bilddaten- bzw. Bildpunktdaten-Takt (Pixel-Takt) des Senders bzw. des Empfängers (im Folgenden auch oft einfach als Takt bezeichnet) werden Bilddaten für einen Bildpunkt bzw. Pixel übertragen, wobei sich die Bilddaten aus den Bildpunktdaten für Farbinformation bzw. Pixel-Data von beispielsweise 24 Bit und den damit verknüpften Steuerdaten für die Bildlage bzw. Pixel-Control-Data von beispielsweise 3 Bit, nämlich HSYNC, VSYNC und DE, zusammensetzen. Die Funktion der Pixel-Data und der Pixel-Control-Data wurde bereits oben beschrieben. Alternativ können sich die Bilddaten aus den Bildpunktdaten für die Farbinformation und Parametern der Bildrahmeninformation zusammensetzen, wobei ein Satz von Parametern den Bildpunktdaten eines Bilds bzw. Halbbilds zugeordnet ist. Aus den vom Sender übertragenen Parametern lassen sich durch den Empfänger in Verbindung mit dem Bildpunktdaten-Takt Steuerdaten im Zeitablauf bestimmen, welche mit den Bildpunktdaten verknüpft sind. Unter der Annahme einer VGA-Auflösung und einer Bildwiederholfrequenz von 50 Hz wie bei dem PAL-Verfahren ergibt sich eine Bildpunktdaten-Taktfrequenz mindestens von f = 640 x 480 x 50 Hz = 15,36 MHz.

Da Fehler bei der Übertragung der Bildpunktdaten für die Farbinformation (im Folgenden auch oft einfach als Bildpunktdaten bezeichnet) anders als diejenigen bei der Übertragung der Steuerdaten für die Bildlage (im Folgenden auch oft einfach als Steuerdaten bezeichnet) oder der Parameter der Bildrahmeninformation (im Folgenden auch oft einfach als Parameter bezeichnet) vom Betrachter kaum wahrgenommen werden, ist das erfindungsgemäße Verfahren im Wesentlichen mit der Erkennung von Fehlern oder unerwarteten Änderungen bei den Steuerdaten bzw. Parametern und mit der Reaktion darauf befasst.

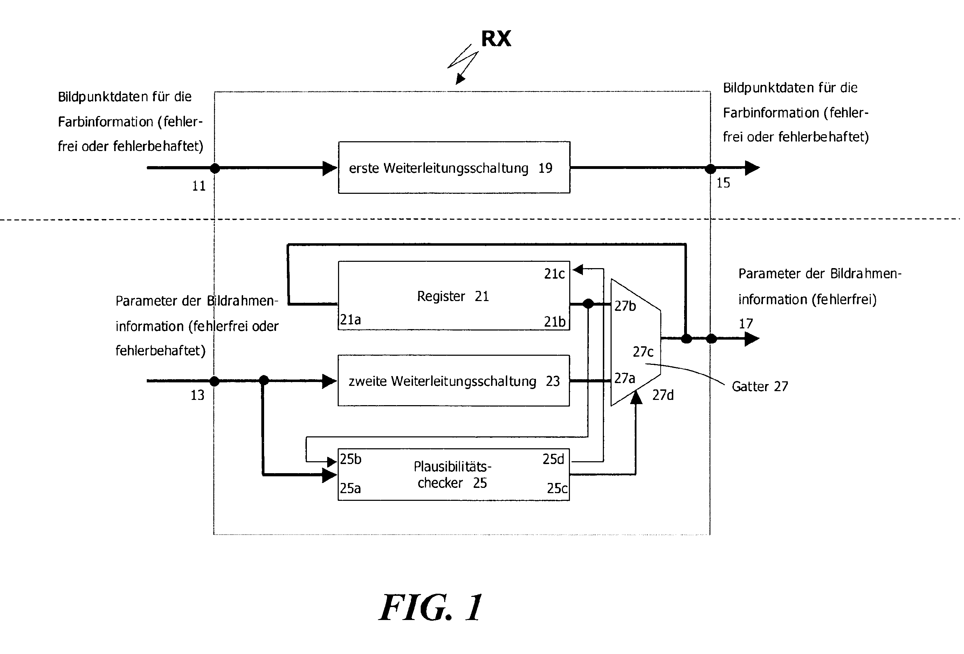

Fig. 1 zeigt ein allgemeines Blockschaltbild eines Empfängers des Systems zur Übertragung von Bilddaten einer ersten Ausführungsform der vorliegenden Erfindung. Der Empfänger RX enthält einen ersten Eingangsanschluss 11 zur Aufnahme von Bildpunktdaten für die Farbinformation, einen zweiten Einganganschluss 13 zur Aufnahme von Parametern der Bildrahmeninformation, einen ersten Ausgangsanschluss 15 zur Ausgabe der Bildpunktdaten und einen zweiten Ausgangsanschluss 17 zur Ausgabe der bearbeiteten Parameter. Des Weiteren enthält der Empfänger RX eine erste Weiterleitungsschaltung 19 zur Weiterleitung der über den ersten Eingangsanschluss 11 eingegebenen Bildpunktdaten an den ersten Ausgangsanschluss 15 des Empfängers RX. Die Parameter werden über den zweiten Eingangsanschluss 13 einem Eingangsanschluss einer zweiten Weiterleitungsschaltung 23 und einem ersten Eingangsanschluss 25a eines Plausibilitätscheckers 25 eingegeben. Die zweite Weiterleitungsschaltung 23 leitet die Parameter einem Gatter 27 über dessen ersten Eingangsanschluss 27a weiter. Ein Speicher bzw. Register 21 ist mit seinem Eingangsanschluss 21a mit einem Ausgangsanschluss 27c des Gatters 27 sowie mit dem zweiten Ausgangsanschluss 17 des Empfängers RX verbunden, während ein Ausgangsanschluss 21b des Registers 21 mit einem zweiten Eingangsanschluss 27b des Gatters 27 sowie mit einem zweiten Eingangsanschluss 25b des Plausibilitätscheckers 25 verbunden ist. Ein Ausgangsanschluss 25c des Plausibilitätscheckers 25 ist mit einem Steueranschluss 27d des Gatters 27 verbunden, während ein Ausgangsanschluss 25d des Plausibilitätscheckers 25 mit einem Steueranschluss 21c des Registers 21 verbunden ist.

Die Parameter der Bildrahmeninformation beschreiben den Zeitablauf der Steuerdaten für die Bildlage HSYNC, VSYNC und DE und werden entweder auf der Senderseite erzeugt und zum Empfänger anstatt der Steuerdaten übertragen oder werden auf der Empfängerseite aus den übertragenen Steuerdaten erzeugt. Der Zeitablauf der Steuerdaten ist streng periodisch und somit nach der ersten Periode, d.h. nach dem ersten Bild oder Halbbild, vorhersagbar. Änderungen des Zeitablaufs der Steuerdaten, die nicht durch Störungen sondern beispielsweise durch eine beabsichtigte Änderung des Formats bzw. der Auflösung der Bilddaten erfolgen, treten im Allgemeinen erst nach sehr vielen Perioden auf und erweisen sich als dauerhaft. Die Vorhersagbarkeit des Zeitablaufs der Steuerdaten ermöglicht einen Plausibilitätscheck des aktuellen Zeitablaufs der Steuerdaten durch Vergleichen der aktuellen Parameter mit vorherigen bzw. früheren Parametern.

Im Folgenden wird die Funktion des Empfängers RX der ersten Ausführungsform beschrieben. Eine nicht dargestellte Logik bzw. Logikschaltung erzeugt aus seriellen digitalen Bilddaten Bildpunktdaten für die Farbinformation und Parameter der Bildrahmeninformation, welche dem Empfänger RX über die ersten und zweiten Eingangsanschlüsse 11 bzw. 13 getrennt voneinander zugeführt werden. Die dem ersten Eingangsanschluss 11 des Empfängers RX zugeführten Bildpunktdaten, welche fehlerbehaftet sein können, werden über die erste Weiterleitungsschaltung 19 dem Ausgangsanschluss 15 des Empfängers verzögert weitergeleitet. Eine Korrektur der eventuell fehlerbehafteten Bildpunktdaten findet bei dieser Ausführungsform nicht statt, könnte jedoch bei einer anderen Ausführungsform vorgesehen sein. Die dem zweiten Eingangsanschluss 13 des Empfängers RX zugeführten Parameter der Bildrahmeninformation, welche fehlerbehaftet sein können, werden einerseits über die zweite Weiterleitungsschaltung 23 dem ersten Eingangsanschluss 27a des Gatters 27 verzögert weitergeleitet und andererseits dem Plausibilitätschecker 25 über dessen ersten Eingangsanschluss 25a zugeführt. In dem Plausibilitätschecker 25 werden die über dessen Eingangsanschluss 25a zugeführten Parameter mit in dem Register 21 gespeicherten und über den Eingangsanschluss 25b zugeführten Referenzparametern der Bildrahmeninformation (im Folgenden auch oft einfach als Referenzparameter bezeichnet) verglichen und auf Plausibilität überprüft. Bei der Plausibilitätsüberprüfung wird festgestellt, ob die dem Empfänger eingegebenen Parameter fehlerbehaftet sind, wobei drei Fälle unterschieden werden.

In einem ersten Fall i) wird festgestellt, dass die Parameter der Bildrahmeninformation und die Referenzparameter der Bildrahmeninformation in der Abfolge zweier Bilder bzw. Halbbilder gleich sind, woraus geschlossen wird, dass die aufgenommenen bzw. empfangenen Parameter fehlerfrei sind, und es wird dem Gatter 27 über dessen Steueranschluss 27d ein erstes Steuersignal von dem Plausibilitätschecker 25 zugeführt, woraufhin die über die zweite Weiterleitungsschaltung 23 weitergeleiteten und verzögerten Parameter durch das Gatter 27 geleitet und an dem zweiten Ausgangsanschluss 17 des Empfängers ausgegeben werden. Da in diesem Fall die Parameter und die Referenzparameter gleich sind, können auf das Anlegen des ersten Steuersignals an den Steueranschluss 27d des Gatters 27 alternativ die in dem Register 21 gespeicherte Referenzparameter durch das Gatter 27 geleitet und an dem zweiten Ausgangsanschluss 17 des Empfängers ausgegeben werden.

Wenn demgegenüber in einem Fall ii) festgestellt wird, dass sich die Parameter der Bildrahmeninformation und die Referenzparameter der Bildrahmeninformation in der Abfolge zweier oder mehrerer Bilder bzw. Halbbilder bis zu einem n-ten Male (n ist eine natürliche Zahl mit einem beliebig festzulegenden Wert, der vorzugsweise zwischen 10 und 200 und insbesondere zwischen 50 und 60 liegt) voneinander unterschieden haben, wird daraus geschlossen, dass die aufgenommenen Parameter fehlerbehaftet sind, und es wird dem Gatter 27 über dessen Steueranschluss 27d ein zweites Steuersignal von dem Plausibilitätschecker 25 zugeführt, woraufhin die in dem Register 21 gespeicherten Referenzparameter durch das Gatter 27 geleitet und an dem zweiten Ausgangsanschluss 17 des Empfängers ausgegeben werden. Dabei wird auf das Feststellen eines Unterschieds zwischen den an Eingangsanschlüssen 25a und 25b des Plausibilitätscheckers 25 angelegten und sich gegenüberstehenden Daten bzw. Informationen, d.h. zwischen den aufgenommenen Parametern und den im Register 21 gespeicherten Referenzparametern, ein in dem Plausibilitätschecker 25 befindlicher und anfänglich auf seinen Anfangwert (von beispielsweise null) initialisierter Zähler um eins inkrementiert, welcher aufgrund seines Werts anzeigt, zum wievielten Male sich die gegenüberstehenden und miteinander verglichenen Parameter in der Abfolge zweier oder mehrerer Bilder bzw. Halbbilder voneinander unterschieden haben. Der Fall ii) kann sich in Folge solange wiederholen, bis entweder der Fall i), bei welchem festgestellt wird, dass die sich gegenüberstehenden und verglichenen Daten bzw. Informationen gleich sind, woraufhin der im Plausibilitätschecker 25 befindliche Zähler auf seinen Anfangswert (null) zurückgesetzt wird, oder der im nächsten Absatz beschriebene Fall iii) eintritt.

Wird schließlich in einem dritten Fall iii) festgestellt, dass sich die aufgenommenen Parameter der Bildrahmeninformation und die in dem Register 21 gespeicherten Referenzparameter der Bildrahmeninformation in der Abfolge zweier oder mehrerer Bilder bzw. Halbbilder mehr als n-mal voneinander unterschieden haben, wird daraus geschlossen, dass sich das Format bzw. die Auflösung der Bilddaten geändert hat, und es wird dem Gatter 27 über dessen Steueranschluss 27d ein drittes Steuersignal von dem Plausibilitätschecker 25 zugeführt, woraufhin die durch die zweite Weiterleitungsschaltung 23 weitergeleiteten und verzögerten Parameter durch das Gatter 27 geleitet und an dem zweiten Ausgangsanschluss 17 des Empfängers ausgegeben werden. Darüber hinaus wird dem Register 21 über dessen Steueranschluss 21 c ein viertes Steuersignal von dem Plausibilitätschecker 25 zugeführt, woraufhin die an dem Ausgangsanschluss 27c des Gatters 27 ausgegebenen Parameter dem Eingangsanschluss 21 a des Registers 21 zugeführt und die in dem Register 21 gespeicherten Referenzparameter durch die aufgenommenen Parameter ersetzt bzw. aktualisiert werden. Der in dem Plausibilitätschecker 25 befindliche Zähler, welcher zählt, zum wievielten Male sich die gegenüberstehenden und miteinander verglichenen Daten bzw. Informationen in der Abfolge zweier oder mehrerer Bilder bzw. Halbbilder voneinander unterschieden haben, wird daraufhin auf seinen Anfangswert (null) zurückgesetzt.

In jedem der oben beschriebene drei Fälle i) bis iii) sind die an dem Ausgangsanschluss 17 des Empfängers RX ausgegebenen Parameter der Bildrahmeninformation fehlerfrei. Dabei erfolgt die Verzögerung der Bildpunktdaten für die Farbinformation durch die Weiterleitungsschaltung 19 einerseits und die Verzögerung der Parameter durch die Weiterleitungsschaltung 23 in Verbindung mit dem Gatter 27, dem Plausibilitätsckecker 25 und dem Register 21 für jeden der drei Fälle i) bis iii) andererseits synchron zueinander, d.h. es weisen für jedes Bild bzw. Halbbild die Bildpunktdaten an den Ein- und Ausgangsanschlüssen 11 bzw. 15 des Empfängers RX denselben Zeitversatz auf wie die Parameter an den Ein- und Ausgangsanschlüssen 13 bzw. 17 des Empfängers RX. Eine Initialisierung des Registers 21 durch die zuletzt ausgegebene oder durch willkürlich festgelegte Parameter kann vorgenomen werden, um den Empfänger schneller in einen stabilen Betriebszustand zu versetzen. Eine derartige Initialisierung ist jedoch nicht zwingend nötig, da der Empfänger RX ohne geeignete Initialisierung des Registers 21 zu Beginn des Betriebs den Fall iii) durchläuft, in welchem das Register 21 durch die aktuellen Parameter aktualisiert wird und der Zähler in dem Plausibilitätschecker 25 auf seinen Anfangswert von null gesetzt wird.

Aus den an dem Anschluss 17 des Empängers RX ausgegebenen und gegebenenfalls zwischengespeicherten Parametern der Bildrahmeninformation können durch einen in Fig. 1 nicht dargestellten Generator die Steuerdaten für die Bildlage HSYNC, VSYNC und DE im korrekten Zeitablauf erzeugt und mit den an dem Anschluss 15 des Empfängers RX ausgegebenen und gegebenenfalls zwischengespeicherten Bildpunktdaten für die Farbinformation zu Bilddaten eines Bilds bzw. Halbbilds verknüpft werden, welche auf einem in Fig. 1 nicht dargestellten Display angezeigt werden könnten.

Die erste Ausführungsform kann sich aus einem System bestehend aus einem in Fig. 1 nicht dargestellten Sender und dem Empfänger RX oder lediglich aus dem Empfänger RX gegebenenfalls jeweils in Verbindung mit einem Display zusammensetzen.

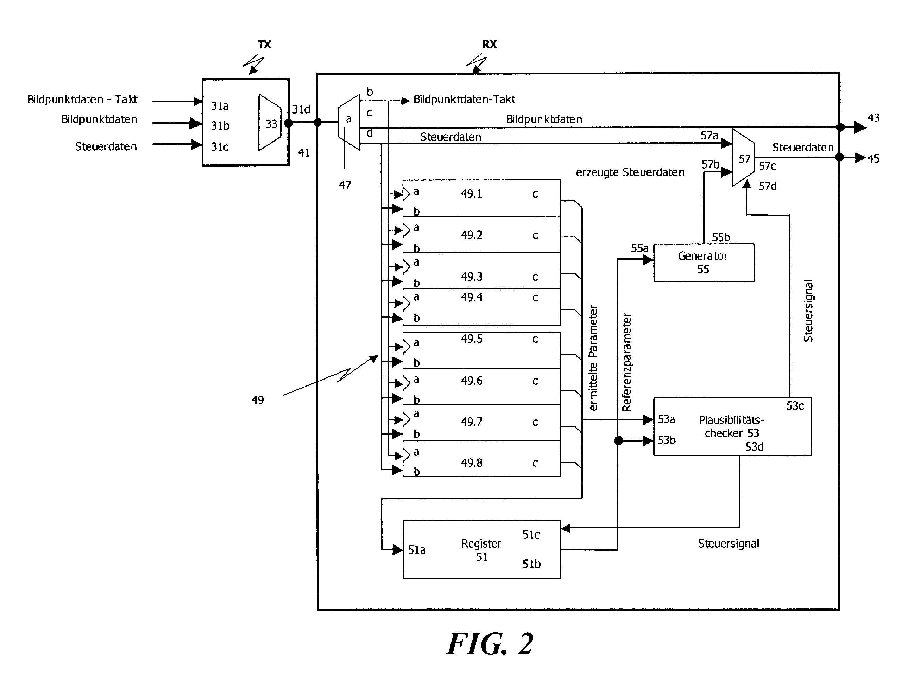

Fig. 2 zeigt eine zweite Ausführungsform der vorliegenden Erfindung. Anders als bei der ersten Ausführungsform werden hier einem Empfänger RX von einem Sender TX über eine Übertragungsstrecke digitale Bilddaten seriell zugeführt, welche sich aus Bildpunktdaten für die Farbinformation und damit verknüpften Steuerdaten für die Bildlage zusammensetzen. Der Sender TX und der Empfänger RX arbeiten mit einem vorzugsweise zueinander synchronisierten Bilddaten- bzw. Bildpunktdaten-Takt (Pixel-Clock). Diese Ausführungsform kann sich dabei ebenfalls wie die erste Ausführungsform aus dem Sender TX und dem Empfänger RX oder lediglich aus dem Empfänger RX gegebenenfalls jeweils in Verbindung mit einem Display zusammensetzen. Der Bildpunktdaten-Takt (Pixel-Clock) kann in dem Sender TX selbst erzeugt oder ihm von außen zugeführt werden, während der Bildpunktdaten-Takt in dem Empfänger RX aufgrund des Dateneingangs erzeugt wird, beispielsweise aufgrund des Zeitablaufs oder des Formats der Bilddaten oder aufgrund von Informationen darüber.

Der Sender TX weist eine Logik bzw. Logikschaltung 33 auf, welche aus dem über einen ersten Eingangsanschluss 31 a zugeführten Bildpunktdaten-Takt, aus über einen zweiten Eingangsanschluss 31 b zugeführten Bildpunktdaten für die Farbinformation (Pixel-Data) und aus einem dritten Eingangsanschluss 31 c zugeführten Steuerdaten für die Bildlage (Pixel-Control-Data) digitale Bilddaten erzeugt, die über einen Ausgangsanschluss 31 d seriell ausgegeben werden.

Zwischen dem Sender TX und dem Empfänger RX ist eine Übertragungsstrecke vorgesehen, die beispielsweise durch einen Lichtleiter, ein elektrisch leitfähiges Kabel oder eine drahtlose Funkverbindung gebildet sein kann.

Der Empfänger RX enthält einen Eingangsanschluss 41, einen ersten Ausgangsanschluss 43 zur Ausgabe von Bildpunkdaten für die Farbinformation, einen zweiten Ausgangsanschluss zur Ausgabe von Steuerdaten für die Bildlage, eine Logikschaltung 47, welche der Aufnahme der von dem Sender TX über die Übertragungsstrecke übertragenen Bilddaten, der Erzeugung des Bildpunktdaten-Takts aus dem Zeitablauf bzw. Format der vom Sender empfangenen Bilddaten und der Aufspaltung der Bilddaten in die Bildpunktdaten und die Steuerdaten dient, eine Vorrichtung 49 zur Ermittlung von Parametern der Bildrahmeninformation aus den empfangenen Steuerdaten, ein Register 51 zur Speicherung von Referenzparametern der Bildrahmeninformation, einen Plausibilitätschecker 53, welcher die Plausibilität der ermittelten Parameter überprüft, einen Generator 55, welcher aus den vom Register 51 ausgegebenen Referenzparametern die Steuerdaten im korrekten Zeitablauf erzeugt, und ein Gatter 57, welches in Abhängigkeit von Steuersignalen des Plausibilitätscheckers 53 entweder die von der Steuerlogikschaltung 47 ausgegebenen Steuerdaten oder die von dem Generator 55 erzeugten Steuerdaten dem zweiten Ausgangsanschluss 45 des Empfängers weiterleitet.

Dabei enthält die Logikschaltung 47 einen Eingangsanschluss 47a, der über die Übertragungsstrecke mit dem Ausgangsanschluss 31d des Senders TX verbunden ist und die Bilddaten aufnimmt, einen ersten Ausgangsanschluss 47b, der mit ersten Eingangsanschlüssen 49.1.a bis 49.8.a der Vorrichtung 49 verbunden ist und an welchem der Bildpunktdaten-Takt (Pixel-Clock) abgenommen wird, einen zweiten Ausgangsanschluss 47c, der mit dem Ausgangsanschluss 43 des Empfängers verbunden ist und an welchem die Bildpunktdaten für die Farbinformation (Pixel-Data) ausgegeben werden, und einen dritten Ausgangsanschluss 47d, der mit zweiten Eingangsanschlüssen 49.1.b bis 49.8.b der Vorrichtung 49 und einem ersten Eingangsanschluss 57a des Gatters 57 verbunden ist und an welchem die aktuellen Steuerdaten für die Bildlage HSYNC, VSYNC und DE (Data-Enable) ausgegeben werden. Ausgangsanschlüsse 49.1.c bis 49.8.c der Vorrichtung 49, an welchen die ermittelten aktuellen Parameter der Bildrahmeninformation ausgegeben werden, sind mit einem ersten Eingangsanschluss 53a des Plausibilitätscheckers 53 und einem Eingangsanschluss 51 a des Registers 51 verbunden. Das Register 51 enthält darüber hinaus einen Ausgangsanschluss 51 b, welcher mit einem zweiten Eingangsanschluss 53b des Plausibilitätscheckers 53 und einem Eingangsanschluss 55a des Gennerators 55 verbunden ist und an welchem die Referenzparameter der Bildrahmeninformation ausgegeben werden. Der Plausibilitätscheckers 53 weist einen ersten Ausgangsanschluss 53d, der mit einem Steueranschluss 51 c des Registers 51 verbunden ist und an welchem ein Steuersignal ausgegeben wird, und einen zweiten Ausgangsanschluss 53c auf, welcher mit einem Steueranschluss 57d des Gatters 57 verbunden ist und an welchem ein weiteres Steuersignal ausgegeben wird. Der Generator 55 enthält einen Ausgangsanschluss 55b, der mit einem zweiten Eingangsanschluss 57b verbunden ist und an welchem aus den Referenzparametern erzeugte Steuerdaten HSYNC, VSYNC und DE ausgegeben werden. Schließlich weist das Gatter 57 einen Ausgangsanschluss 57c auf, der mit dem zweiten Ausgangsanschluss 45 des Empfängers RX verbunden ist und an welchem im Ansprechen auf das weitere Steuersignal des Plausibilitätscheckers 53 entweder die an dem dritten Ausgangsanschluss 47d der Logikschaltung 47 ausgegebenen Steuerdaten oder die von dem Generator 55 aus den Referenzparametern erzeugten Steuerdaten ausgegeben werden.

Im Folgenden wird die Funktion der aus dem Sender TX, dem Empfänger RX und dem Display gebildeten zweiten Ausführungsform beschrieben.

Dem Sender TX werden über seine drei Eingangsanschlüsse 31 a, 31 b und 31 c der Bildpunktdaten-Takt, die Bildpunktdaten für die Farbinformation bzw. die Steuerdaten für die Bildlage zugeführt. Mittels der Logikschaltung 33 werden digitale serielle Bilddaten bestehend aus den Bildpunktdaten und den Steuerdaten erzeugt, an dem Ausgang 31 d des Senders TX ausgegeben und über eine Übertragungsstrecke dem Eingangsanschluss 41 des Empfängers RX zugeführt.

Der Empfänger RX arbeitet mit einem Bildpunktdaten-Takt, der mit dem Bildpunktdaten-Takt des Senders synchronisiert ist und in der Logikschaltung 47 aufgrund des Dateneingangs, beispielsweise aufgrund des Zeitablaufs oder des Formats der vom Sender TX empfangenen Bilddaten oder aufgrund von Informationen darüber, erzeugt und an dem ersten Ausgangsanschluss 47b der Logikschaltung 47 bereitgestellt wird. Mittels der Logikschaltung 47 des Empfängers RX werden aus den empfangenen Bilddaten in Verbindung mit dem Bildpunktdaten-Takt die Bildpunktdaten und die Steuerdaten wiedergewonnen und an den Ausgangsanschlüssen 47c bzw. 47d ausgegeben. Dabei werden die empfangenen Steuerdaten über den ersten Eingangsanschluss 57a dem Gatter 57 und über die zweiten Eingangsanschlüsse 49.1 b bis 49.8b der Vorrichtung 49 zur Ermittlung der Parameter der Bildrahmeninformation aus den empfangenen Steuerdaten zugeführt.

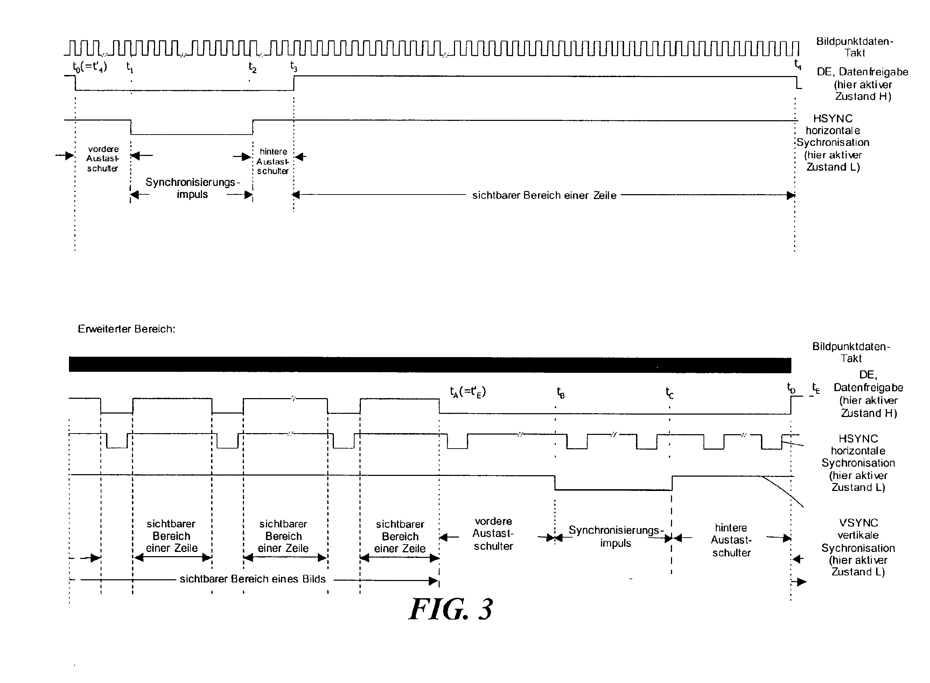

Es wird angenommen, dass sich die Steuerdaten für die Bildlage (Pixel-Control-Data) aus drei Bit, nämlich HSYNC, VSYNC und DE (Data-Enable) zusammensetzen, wobei das Signal HSYNC durch den Zustand L (Low), welcher dem Zustand 0 (null) entspricht, den Beginn einer neuen Zeile festlegt, VSYNC durch den Zustand L den Beginn eines neuen Bilds festlegt und DE durch den Zustand L festlegt, dass die zugehörigen Bildpunktdaten (Pixel-Data) nocht nicht gültig sind (siehe dazu Fig. 3). Die jeweiligen Zustände sind dabei willkürlich festgelegt. Unter der Annahme, dass sich die Steuerdaten aus den oben angeführten drei Bits zusammensetzen, lassen sich für jedes Bild bzw. Halbbild zwei mal vier Parameter der Bildrahmeninformation feststellen, welche in Verbindung mit dem Bildpunktdaten-Takt die Abfolge der drei Bits exakt beschreiben.

Die ersten vier zu ermittelnden Parameter der Bildrahmeninformation beziehen sich dabei auf das Verhältnis von HSYNC und DE eines Zeilenwechsels, bei welchem der Zustand des HSYNC von L in den Zeitraum des Zustands des DE von L fällt. Wenn für den Zeilenwechsel DE zum Zeitpunkt $t_0$ seinen Zustand von H (High), welcher dem Zustand 1 (eins) entspricht, auf L ändert, bestimmt der erste Parameter die Anzahl von Bildpunktdaten-Takten (im Folgenden auch oft einfach als Takte bezeichnet), bis sich der Zustand des HSYNC zum Zeitpunkt $t_1$ von H auf L ändert, d.h. die Anzahl von Takten in der vorderen Austastschulter von HSYNC (im Zeitraum von $t_0$ bis $t_1$) gemäß Fig. 3, welche durch den Zähler 49.1 gezählt wird. Der zweite Parameter bestimmt die Anzahl von Takten, bis sich danach der Zustand des HSYNC zum Zeitpunkt $t_2$ von L wiederum auf H ändert, d.h. die Anzahl von Takten während des Synchronisierungsimpulses HSYNC (im Zeitraum von $t_1$ bis $t_2$), welche durch den Zähler 49.2 gezählt wird. Der dritte Parameter bestimmt demgegenüber die Anzahl von Takten, bis sich danach der Zustand des DE zum Zeitpunkt $t_3$ wieder von L auf H ändert, d.h die Anzahl von Takten während der hinteren Austastschulter von HSYNC (im Zeitraum von $t_2$ bis $t_3$), welche von dem Zähler 49.3 gezählt wird. Mit anderen Worten, es werden in Einheiten des Takts die Länge bzw. die Dauer des DE im Zustand L und die Lage des HSYNC mit dem Zustand L innerhalb des DE mit dem Zustand L durch die ersten drei Parameter bestimmt. Schließlich bestimmt der vierte Parameter die Anzahl von Takten, bis sich danach der Zustand des DE zum Zeitpunkt $t_4$ von H wieder auf L ändert und somit der Durchlauf einer Zeile abgeschlossen ist, d.h. die Anzahl von Takten in einem Zeitabschnitt der Austastung einer Zeile im sichtbaren Bereich (im Zeitraum von $t_3$ bis $t_4$), welche vom Zähler 49.4 gezählt wird. Der Vollständigkeit halber sei hier erwähnt, dass der Zeitpunkt $t_0$ eines Zyklus mit dem Zeitpunkt $t_4$ des vorausgehenden Zyklus (in Fig. 3 als $t'_4$ bezeichnet) zusammenfällt.

Die zweiten vier zu ermittelnden Parameter beziehen sich auf das Verhältnis von VSYNC und DE eines Bildwechsels, bei welchem der Zustand des VSYNC von L in den Zeitraum des Zustands des DE von L fällt. Es ist dabei zu beachten, dass die Zeitdauer des DE (Zustand L) für den Bildwechsel größer als diejenige des DE (Zustand L) für den Zeilenwechsel ist. Wenn für den Bildwechsel DE zum Zeitpunkt $t_A$ seinen Zustand von H auf L ändert, bestimmt der erste Parameter die Anzahl von Bildpunktdaten-Takten, bis sich der Zustand des VSYNC zum Zeitpunkt $t_B$ von H auf L ändert, d.h. die Anzahl von Takten in der vorderen Austastschulter von VSYNC (im Zeitraum von $t_A$ bis $t_B$), welche durch den Zähler 49.5 gezählt wird. Der zweite Parameter bestimmt die Anzahl von Takten, bis sich danach der Zustand des VSYNC zum Zeitpunkt $t_C$ von L auf H ändert, d.h. die Anzahl von Takten während des Synchronisierungsimpulses VSYNC (im Zeitraum von $t_B$ bis $t_C$), welche durch den Zähler 49.6 gezählt wird. Der dritte Parameter bestimmt demgegenüber die Anzahl von Takten, bis sich danach der Zustand des DE zum Zeitpunkt $t_D$ wieder von L auf H ändert, d.h. die Zahl von Takten während der hinteren Austastschulter von VSYNC (im Zeitraum von $t_C$ bis $t_D$), welche von dem Zähler 49.7 gezählt wird. Mit anderen Worten, es werden in Einheiten des Takts die Länge bzw. die Dauer des DE im Zustand L und die Lage des VSYNC mit dem Zustand L innerhalb des DE mit dem Zustand L durch die ersten drei Parameter bestimmt. Schließlich bestimmt der vierte Parameter die Anzahl von Takten, bis sich danach der Zustand des DE unmittelbar vor der nächsten vorderen Austastschulter von VSYNC zum Zeitpunkt $t_E$ von H wieder auf L ändert, und somit der Durchlauf aller Zeilen eines Bilds abgeschlossen ist, d.h. die Anzahl von Takten in einem Zeitabschnitt der Austastung aller Zeilen eines Bilds im sichtbaren Bereich (im Zeitraum von $t_D$ bis $t_E$), welche vom Zähler 49.8 gezählt wird. Zur Bestimmung der zweiten vier zu ermittelnden Parameter können hier anstelle der Bildpunktdaten-Takte alternativ die HSYNC-Takte gezählt werden. Der Vollständigkeit halber sei auch hier erwähnt, dass der Zeitpunkt $t_A$ eines Zyklus mit dem Zeitpunkt $t_E$ des vorausgehenden Zyklus (in Fig. 3 als $t'_E$ bezeichnet) zusammenfällt.

Die von der Vorrichtung 49 ermittelten insgesamt acht Parameter für ein Bild bzw. Halbbild werden einerseits dem Plausibilitäschecker 53 und andererseits dem Register 51 übertragen. Im Ansprechen auf ein viertes Steuersignal von dem Plausibilitätschecker 53, das über den Steueranschluss 51 c eingegeben wird, werden in dem Register 51 die über den Eingangsanschluss 51 a zugeführten ermittelten Parameter als Referenzparameter der Bildrahmeninformation gespeichert. Das Register 51 gibt über seinen Ausgangsanschluss 51 b die gespeicherten Referenzparameter einerseits dem Plausibilitätschecker 53 über dessen zweiten Eingangsanschluss 53b und andererseits dem Generator 55 über dessen Eingangsanschluss 55a aus, der in Verbindung mit dem Bildpunktdaten-Takt aus den gespeicherten Referenzparameter Steuerdaten für die Bildlage HSYNC, VSYNC und DE im Zeitablauf für jeweils ein Bild bzw. Halbbild erzeugt und an seinem Ausgangsanschluss 55b ausgibt.

Nach dem Ermitteln der Parameter der Bildrahmeninformation durch die Vorrichtung 49, welche in Verbindung mit dem Bildpunktdaten-Takt den Zeitablauf der Steuerdaten für ein Bild bzw. Halbbild genau beschreiben, werden die von der Vorrichtung 49 ermittelten Parameter in dem Plausibilitätschecker 53 mit in dem Register 51 abgespeicherten, früher ermittelten Parametern verglichen und auf Plausibilität untersucht. Liegen noch keine abgespeicherten, früher ermittelten Parameter vor, so können die gerade ermittelten Parameter zur Initialisierung des Registers 51 abgespeichert werden.

Wenn die in dem Plausibilitätschecker 53 einander gegenübergestellten Parameter der Bildrahmeninformation gleich sind, wird davon ausgegangen, dass keine Störung der Steuerdaten für die Bildlage oder keine Änderung des Formats oder keine andere Struktur der Steuerdaten vorliegt, und es werden die empfangenen aktuellen Steuerdaten, die an dem dritten Ausgangsanschluss 47d der Logikschaltung 47 ausgegeben werden, der weiteren Verarbeitung zu Grunde gelegt (Fall i). D.h. der Plausibilitätschecker 53 erzeugt in diesem Fall ein erstes Steuersignal, welches an seinem zweiten Ausgangsanschluss 53c ausgegeben und über den Steueranschluss 57d dem Gatter 57 übertragen wird, derart, dass das Gatter 57 im Ansprechen auf das erste Steuersignal die an seinem ersten Eingangsanschluss 57a angelegten empfangenen Steuerdaten an seinen Ausgangsanschluss 57c durchschaltet, woraufhin die empfangenen Steuerdaten dem zweiten Ausgangsanschluss 45 des Empfängers RX übertragen werden. Da in diesem Fall jedoch wegen der Gleichheit der in dem Plausibilitätschecker 53 einander gegenübergestellten Parameter die dem ersten Eingangsanschluss 57a des Gatters 57 angelegten Steuerdaten und die dem zweiten Eingangsanschluss 57b des Gatters 57 angelegten und von dem Generator 55 aus den in dem Register 51 gespeicherten Referenzparametern der Bildrahmeninformation erzeugten Steuerdaten zueinander gleich sind, kann alternativ das Gatter 57 im Ansprechen auf das erste Signal die an seinem zweiten Eingangsanschluss 57b angelegten erzeugten Steuerdaten an seinen Ausgangsanschluss 57c durchschalten.

Wenn jedoch die in dem Plausibilitätschecker 53 einander gegenübergestellten Parameter der Bildrahmeninformation zueinander unterschiedlich sind, wird anfangs von einer Störung der Steuerdaten für die Bildlage ausgegangen, es wird der Wert eines in dem Plausibilitätschecker 53 vorgesehenen Zählers, der anfangs auf null initialisiert worden ist, um eins erhöht, und es werden die abgespeicherten Referenzparameter der Bildrahmeninformation anstelle der empfangenen Steuerdaten der weiteren Verarbeitung wie oben beschrieben zu Grunde gelegt (Fall ii). D.h. der Plausibilitätschecker 53 erzeugt in diesem Fall ein zweites Steuersignal, welches an seinem zweiten Ausgangsanschluss 53c ausgegeben und über den Steueranschluss 57d dem Gatter 57 übertragen wird, derart, dass das Gatter 57 im Ansprechen auf das zweite Steuersignal die an seinem zweiten Eingangsanschluss 57b angelegten und von dem Generator 55 aus den im Register 51 gespeicherten Referenzparametern erzeugten Steuerdaten an seinen Ausgangsanschluss 57c durchschaltet, woraufhin die erzeugten Steuerdaten dem zweiten Ausgangsanschluss 45 des Empfängers RX übertragen werden.

Die oben beschriebene Prozedur (Fall ii) wird für jedes Bild bzw. Halbbild wiederholt, bis entweder der Fall i) eintritt, d.h. bis die in dem Plausibilitätschecker 53 einander gegenübergestellten Parameter der Bildrahmeninformation zueinander gleich sind, woraufhin der Zähler des Plausibilitätschecker 53 auf seinen Anfangswert (null) zurückgesetzt wird, oder bis der Zähler des Plausibilitätscheckers 53 einen Maximalwert von n überschritten hat, d.h. bis die einander gegenübergestellten Parameter mehr als n-mal in Folge zueinander unterschiedlich sind oder anders ausgedrückt, bis die Störung der Steuerdaten für ein Bild bzw. Halbbild häufiger als n-mal aufgetreten ist. Da Störungen der Steuerdaten meist nicht sehr häufig auftreten, wird mit dem Überschreiten des Maximalwerts des Zählers von einer soeben erfolgten Änderung des Formats oder der Struktur der Steuerdaten für die Bildlage ausgegangen, es wird von dem Plausibilitätsregister 53 ein Signal (ein viertes Steuersignal) erzeugt, welches an seinem ersten Ausgangsanschluss 53d ausgegeben wird, und dem Register 51 über dessen Steueranschluss 51 c übertragen, woraufhin die von der Vorrichtung 49 ermittelten aktuellen Parameter in dem Register 51 als aktualisierte Referenzparameter abgespeichert werden und der Wert des Zählers auf seinen Anfangswert von null zurückgesetzt wird. Die nunmehr in dem Register gespeicherten Referenzparameter, welche den ermittelten aktuellen Parametern entsprechen, werden der weiteren Verarbeitung zu Grunde gelegt (Fall iii). D.h. der Plausibilitätschecker 53 erzeugt in diesem Fall ein drittes Steuersignal, welches an seinem zweiten Ausgangsanschluss 53c ausgegeben und über den Steueranschluss 57d dem Gatter 57 übertragen wird, derart, dass das Gatter 57 im Ansprechen auf das dritte Steuersignal die an seinem zweiten Eingangsanschluss 57b angelegten und von dem Generator 55 aus den in dem Register 51 gespeicherten Referenzparametern erzeugten Steuerdaten an seinen Ausgangsanschluss 57c durchschaltet, woraufhin die erzeugten Steuerdaten dem zweiten Ausgangsanschluss 45 des Empfängers RX übertragen werden. Da in diesem Fall jedoch die den Eingangsanschlüssen 57a und 57b angelegten empfangenen bzw. erzeugten Steuerdaten gleich sind, kann alternativ das Gatter 57 im Ansprechen auf das dritte Steuersignal die an seinem ersten Eingangsanschluss 57a angelegten empfangenen Steuerdaten an seinen Ausgangsanschluss 57c durchschalten.

Für die o.a. erste und zweite Ausführungsform gelten die folgenden Modifizierungen.

Der in dem Plausibilitätschecker 25 bzw. 53 befindliche Zähler wird erst dann inkrementiert, wenn die einander gegenübergestellten Parameter der Bildrahmeninformation auf die gleiche Weise zueinander unterschiedlich sind, wodurch die Richtigkeit der Annahme bekräftigt wird, dass es sich bei einer häufigen Änderung der empfangenen Steuerdaten für die Bildlage nicht um eine Störung, sondern um eine gewollte Änderung des Formats bzw. der Auflösung der Bilddaten handelt.

Das Gatter 57 arbeitet derart, dass die in den Fällen i), ii) und iii) durchgeschalteten Steuerdaten für die Bildlage synchron mit den Bildpunktdaten an den Ausgängen 45 bzw. 43 des Empfängers RX angelegt werden.

Im Falle eines Systems, welches einen Sender und einen Empfänger mit Anzeigevorrichtung bzw. Display umfasst, werden die aus den Bildpunktdaten für die Farbinformation und den Steuerdaten für die Bildlage zusammengesetzten Bildpunktdaten auf dem Display als Bild bzw. als Abfolge von Bildern angezeigt.

Bei dem oben beschriebenen Verfahren der ersten und zweiten Ausführungsform werden die Bilddaten zwischen dem Sender oder einer anderen Quelle vorzugsweise über Lichtleiter oder über elektrisch leitfähige Kabel übertragen, um die Störungsanfälligkeit der Übertragung von Bilddaten weiter zu verringern.

Die Bilddaten können einerseits analog oder digital und andererseits parallel oder seriell übertragen werden, wodurch die Einsatzfähigkeit der erfindungsgemäßen Verfahren erhöht wird.

Als besonders effektiv hat es sich herausgestellt, pro Bildpunktdaten-Takt Bildpunktdaten für die Farbtiefe von 24 Bit und Steuerdaten für die Bildlage von 3 Bit (HSYNC, VSYNC, DE) zu übertragen. Bei Vorliegen von Steuerdaten von 3 Bit werden dabei in Verbindung mit dem Bildpunktdaten-Takt zwei mal vier Parameter der Bildrahmeninformation pro Bild bzw. Halbbild ermittelt. Eine Bildpunktdatenbreite bzw. eine Farbtiefe von 24 Bit entspricht dabei 256 Farbtönen pro Farbkanal und damit ca. 16,7 Millionen Farben pro Bildpunkt.

Ebenfalls als besonders effektiv hat es sich herausgestellt, den Wert für n derart festzulegen, dass die Beziehung $10 \leq n \leq 200$ und insbesondere $50 \leq n \leq 60$ erfüllt wird. Bei einer Bildwiederholfrequenz bzw. einer Halbbildfrequenz zwischen 50 und 60 Hertz wie bei dem PAL- bzw. NTSC-Verfahren und auch darüber hinaus können somit Bilder über eine Sekunde erzeugt werden, bevor der Bildverarbeitung eine neue Auflösung oder Struktur der Bildpunkte bzw. der Bilddaten zu Grunde gelegt wird. Damit wird eine verfrühte und gegebenenfalls falsche Annahme einer Format- bzw. Auflösungsänderung vermieden.

Merkmale, die in Bezug auf eine Ausführungsform beschrieben wurden, lassen sich auf die jeweils andere Ausführungsform anwenden bzw. sich mit den dort vorhandenen Merkmalen kombinieren.

Des Weiteren wird aus Gründen der Vollständigkeit darauf hingewiesen, dass der Signalfluss zwischen den Komponenten der jeweiligen Ausführungsformen vorzugsweise seriell mit einem geeigneten Takt in Abhängigkeit des Bildpunktdaten-Takts oder unabhängig davon erfolgt. Dort, wo es technisch sinnvoll erscheit, können die Signale gepuffert werden.

Die Beschreibung der bevorzugten Ausführungsformen dient lediglich der Erläuterung und nicht der Beschränkung der vorliegenden Erfindung. Gegenstand der Erfindung ist nicht nur das Verfahren zum Verarbeiten von Bilddaten, welches von einem System bestehend aus Sender und Empfänger wie oben beschrieben durchgeführt wird, sondern ebenfalls das Verfahren zum Verarbeiten von Bilddaten, welches lediglich von einem Empfänger wie oben beschrieben durchgeführt wird.

**Patentansprüche**

1.  Verfahren zum Verarbeiten von in Bilddaten enthaltenen Steuerdaten für die Bildlage, mit den Schritten:

    a) Empfangen von Bilddaten, welche Bildpunktdaten für die Farbinformation und die dazugehörigen Steuerdaten für die Bildlage beinhalten,
    b) Ermitteln von Parametern der Bildrahmeninformation aus der Folge der Steuerdaten eines Bilds bzw. Halbbilds, wobei die Parameter in Verbindung mit einem Bildpunktdaten-Takt die jeweiligen Steuerdaten des Bilds bzw. Halbbilds im Zeitablauf bestimmen,
    c) Vergleichen der ermittelten Parameter mit Referenzparametern,
    d) Erzeugen von Steuerdaten des Bilds bzw. Halbbilds

    i) aus den empfangenen Steuerdaten oder den Referenzparametern, wenn sich die ermittelten Parameter des Bilds bzw. Halbbilds von den Referenzparametern in der Abfolge zweier oder mehrerer Bilder bzw. Halbbilder nicht unterschieden haben,
    ii) aus den Referenzparametern, wenn sich die ermittelten Parameter des Bilds bzw. Halbbilds von den Referenzparametern in der Abfolge mehrerer Bilder bzw. Halbbilder bis zu n-mal unterschieden haben, wobei n eine natürliche Zahl ist, oder
    iii) aus den empfangenen Steuerdaten oder den Referenzparametern, wenn sich die ermittelten Parameter des Bilds bzw. Halbbilds von den Referenzparametern in der Abfolge mehrerer Bilder bzw. Halbbilder mehr als n-mal unterschieden haben,

    wobei die Referenzparameter vor dem Erzeugen der Steuerdaten durch die ermittelten Parameter aktualisiert werden, wenn sich die ermittelten Parameter von den Referenzparametern in der Abfolge mehrerer Bilder bzw. Halbbilder mehr als n-mal unterschieden haben, und
    e) Erzeugen sowie Ausgeben von Bilddaten aus den im Schritt d) gebildeten Steuerdaten und den dazugehörigen Bildpunktdaten.

2.  Verfahren zum Verarbeiten von in Bilddaten enthaltenen Steuerdaten für die Bildlage, mit den Schritten:

    $a_1$) Senden von Bilddaten, welche Bildpunkdaten für die Farbinformation und die dazugehörigen Steuerdaten für die Bildlage beinhalten,
    $a_2$) Empfangen der gesendeten Bilddaten,
    b) Ermitteln von Parametern der Bildrahmeninformation aus der Folge der Steuerdaten eines Bilds bzw. Halbbilds, wobei die Parameter in Verbindung mit einem Bildpunktdaten-Takt die jeweiligen Steuerdaten des Bilds bzw. Halbbilds im Zeitablauf bestimmen,
    c) Vergleichen der ermittelten Parameter mit Referenzparametern,
    d) Erzeugen von Steuerdaten des Bilds bzw. Halbbilds

    i) aus den empfangenen Steuerdaten oder den Referenzparametern, wenn sich die ermittelten Parameter des Bilds bzw. Halbbilds von den Referenzparametern in der Abfolge zweier oder mehrerer Bilder bzw. Halbbilder nicht unterschieden haben,
    ii) aus den Referenzparametern, wenn sich die ermittelten Parameter des Bilds bzw. Halbbilds von den Referenzparametern in der Abfolge mehrerer Bilder bzw. Halbbilder bis zu n-mal unterschieden haben, wobei n eine natürliche Zahl ist, oder
    iii) aus den empfangenen Steuerdaten oder den Referenzparametern, wenn sich die ermittelten Parameter des Bilds bzw. Halbbilds von den Referenzparametern in der Abfolge mehrerer Bilder bzw. Halbbilder mehr als n-mal unterschieden haben,

    wobei die Referenzparameter vor dem Erzeugen der Steuerdaten durch die ermittelten Parameter aktualisiert werden, wenn sich die ermittelten Parameter von den Referenzparametern in der Abfolge mehrerer Bilder bzw. Halbbilder mehr als n-mal unterschieden haben, und
    e) Erzeugen sowie Ausgeben von Bilddaten aus den im Schritt d) gebildeten Steuerdaten und den dazugehörigen Bildpunktdaten, und
    f) Erzeugen einer Abfolge von Bildern auf der Grundlage der im Schritt e) ausgegebenen Bilddaten.

**3.** Verfahren zum Verarbeiten von in Bilddaten enthaltenen Parametern der Bildrahmeninformation, mit den Schritten:

a) Empfangen von Bilddaten, welche Bildpunktdaten für die Farbinformation und Parameter der Bildrahmeninformation aufweisen, wobei die Parameter in Verbindung mit einem Bildpunktdaten-Takt Steuerdaten für die Bildlage bestimmen und die Steuerdaten den jeweiligen Bildpunktdaten zugehörig sind,
b) Vergleichen der empfangenen Parameter eines Bilds bzw. Halbbilds mit Referenzparametern,
c) Erzeugen von Steuerdaten des Bilds bzw. Halbbilds

i) aus den empfangenen Parametern oder den Referenzparametern, wenn sich die empfangenen Parameter des Bilds bzw. Halbbilds von den Referenzparametern in der Abfolge zweier oder mehrerer Bilder bzw. Halbbilder nicht unterschieden haben,
ii) aus den Referenzparametern, wenn sich die empfangenen Parameter des Bilds bzw. Halbbilds von den Referenzparametern in der Abfolge mehrerer Bilder bzw. Halbbilder bis zu n-mal unterschieden haben, wobei n eine natürliche Zahl ist, oder
iii) aus den empfangenen Parametern oder den Referenzparametern, wenn sich die empfangenen Parameter des Bilds bzw. Halbbilds von den Referenzparametern in der Abfolge mehrerer Bilder bzw. Halbbilder mehr als n-mal unterschieden haben,

wobei die Referenzparameter vor dem Erzeugen der Steuerdaten durch die empfangenen Parameter aktualisiert werden, wenn sich die ermittelten Parameter von den Referenzparametern in der Abfolge mehrerer Bilder bzw. Halbbilder mehr als n-mal unterschieden haben, und
d) Erzeugen sowie Ausgeben von Bilddaten aus den im Schritt c) gebildeten Steuerdaten und den dazugehörigen Bildpunktdaten.

**4.** Verfahren zum Verarbeiten von in Bilddaten enthaltenen Parametern der Bildrahmeninformation, mit den Schritten:

$a_1$) Senden von Bilddaten, welche Bildpunktdaten für die Farbinformation und Parameter der Bildrahmeninformation aufweisen, wobei die Parameter in Verbindung mit einem Bildpunktdaten-Takt Steuerdaten für die Bildlage bestimmen und die Steuerdaten den jeweiligen Bildpunktdaten zugehörig sind,
$a_2$) Empfangen der gesendeten Bilddaten,
b) Vergleichen der empfangenen Parameter eines Bilds bzw. Halbbilds mit Referenzparametern,
c) Erzeugen von Steuerdaten des Bilds bzw. Halbbilds

i) aus den empfangenen Parametern oder den Referenzparametern, wenn sich die empfangenen Parameter des Bilds bzw. Halbbilds von den Referenzparametern in der Abfolge zweier oder mehrerer Bilder bzw. Halbbilder nicht unterschieden haben,
ii) aus den Referenzparametern, wenn sich die empfangenen Parameter des Bilds bzw. Halbbilds von den Referenzparametern in der Abfolge mehrerer Bilder bzw. Halbbilder bis zu n-mal unterschieden haben, wobei n eine natürliche Zahl ist, oder
iii) aus den empfangenen Parametern oder den Referenzparametern, wenn sich die empfangenen Parameter des Bilds bzw. Halbbilds von den Referenzparametern in der Abfolge mehrerer Bilder bzw. Halbbilder mehr als n-mal unterschieden haben,

wobei die Referenzparameter vor dem Erzeugen der Steuerdaten durch die empfangenen Parameter aktualisiert werden, wenn sich die ermittelten Parameter von den Referenzparametern in der Abfolge mehrerer Bilder bzw. Halbbilder mehr als n-mal unterschieden haben, und
d) Erzeugen sowie Ausgeben von Bilddaten aus den im Schritt c) gebildeten Steuerdaten und den dazugehörigen Bildpunktdaten, und
e) Erzeugen einer Abfolge von Bildern auf der Grundlage der im Schritt d) ausgegebenen Bilddaten.

**5.** Verfahren nach einem der Ansprüche 1 oder 2, **gekennzeichnet durch** den Schritt des Erzeugens von Steuerdaten des Bilds bzw. Halbbilds aus den empfangenen Steuerdaten oder den Referenzparametern und des Aktualisierens der in dem Schritt d) verwendeten Referenzparameter **durch** die ermittelten Parameter, wenn sich die ermittelten Parameter von den Referenzparametern in der Abfolge mehrerer Bilder bzw. Halbbilder mehr als n-mal in der gleichen Weise unterschieden haben.

**6.** Verfahren nach einem der Ansprüche 3 oder 4, **gekennzeichnet durch** den Schritt des Erzeugens von Steuerdaten des Bilds bzw. Halbbilds aus den empfangenen Parametern oder den Referenzparametern und des Aktalisierens der in dem Schritt c) verwendeten Referenzparameter **durch** die empfangenen Parameter, wenn sich die empfangenen Parameter von den Referenzparametern in der Abfolge mehrerer Bilder bzw. Halbbilder mehr als n-mal in der gleichen Weise unterschieden haben.

**7.** Verfahren nach einem der vorausgehenden Ansprüche, **dadurch gekennzeichnet, dass** die Bilddaten über Lichtleiter oder über elektrisch leitfähige Kabel übertragen werden.

**8.** Verfahren nach einem der vorausgehenden Ansprüche, **dadurch gekennzeichnet, dass** die Bilddaten analog oder digital übertragen werden.

**9.** Verfahren nach einem der vorausgehenden Ansprüche, **dadurch gekennzeichnet, dass** die Bilddaten parallel oder seriell übertragen werden.

**10.** Verfahren nach einem der vorausgehenden Ansprüche, **dadurch gekennzeichnet, dass** pro Bildpunktdaten-Takt Bildpunktdaten mit einer Farbtiefe von 10, 12, 18, 24 oder 30 Bit übertragen werden.

**11.** Verfahren nach einem der vorausgehenden Ansprüche, **dadurch gekennzeichnet, dass** pro Bildpunktdaten-Takt Steuerdaten von 3 Bit (H-Sync, V-Sync, DE) übertragen werden.

**12.** Verfahren nach einem der vorausgehenden Ansprüche, **dadurch gekennzeichnet, dass** bei Vorliegen von Steuerdaten von 3 Bit in Verbindung mit dem Bildpunktdaten-Takt 2 mal 4 Parameter pro Bild bzw. Halbbild ermittelt oder empfangen werden.

**13.** Verfahren nach einem der vorausgehenden Ansprüche, **dadurch gekennzeichnet, dass** für n die Beziehung

$$10 \leq n \leq 200 \text{ und insbesondere } 50 \leq n \leq 60 \text{ gilt.}$$

**14.** Verfahren nach einem der vorausgehenden Ansprüche, **gekennzeichnet durch** einen Schritt des Initialisierens der Referenzparameter **durch** einen Satz von Parametern, welcher einem vorbestimmten Format der Bilddaten entspricht.

**15.** Verfahren nach einem der vorausgehenden Ansprüche, **gekennzeichnet durch** einen Schritt des Initialisierens der Referenzparameter **durch** einen Satz von Parametern, welcher dem zuletzt aktualisierten Satz von Referenzparametern entspricht.

RX

Bildpunktdaten für die
Farbinformation (fehlerfrei oder fehlerbehaftet)

11

erste Weiterleitungsschaltung 19

Bildpunktdaten für die
Farbinformation (fehlerfrei oder fehlerbehaftet)

15

Parameter der Bildrahmeninformation (fehlerfrei oder
fehlerbehaftet)

13

21c

Register 21

21a                                21b

zweite Weiterleitungsschaltung 23

27b

27c

27a
27d

Parameter der Bildrahmeninformation (fehlerfrei)

17

Gatter 27

25b                                25d

Plausibilitätschecker 25

25a                                25c

*FIG. 1*

EP 1 944 981 A1

EP 1 944 981 A1

**TX**

**RX**

Bildpunktdaten - Takt → | 31a |
Bildpunktdaten → | 31b | **33** | 31d
Steuerdaten → | 31c |

41

b → Bildpunktdaten-Takt

a c
d

Bildpunktdaten → 43

Steuerdaten 57a

47

erzeugte Steuerdaten 57b | 57 | 57c Steuerdaten → 45

57d

| a | 49.1 | c |
| b | | |

| a | 49.2 | c |
| b | | |

| a | 49.3 | c |
| b | | |

| a | 49.4 | c |
| b | | |

| a | 49.5 | c |
| b | | |

| a | 49.6 | c |
| b | | |

| a | 49.7 | c |
| b | | |

| a | 49.8 | c |
| b | | |

49

55a | Generator | 55b
55

ermittelte Parameter

Referenzparameter

53a | Plausibilitäts- | 53c
53b | checker 53 | 53d

Steuersignal

51a | Register | 51c
51 | 51b

Steuersignal

*FIG. 2*

FIG. 3

Bildpunktdaten-Takt

DE, Datenfreigabe (hier aktiver Zustand H)

HSYNC horizontale Sychronisation (hier aktiver Zustand L)

VSYNC vertikale Sychronisation (hier aktiver Zustand L)

Erweiterter Bereich:

sichtbarer Bereich einer Zeile

sichtbarer Bereich eines Bilds

vordere Austast-schulter

Synchronisierungs-impuls

hintere Austast-schulter

Bildpunktdaten für die
Farbinformation (fehlerfrei)

Parameter der Bildrahmeninformation (fehlerfrei)

TX
(Serializer-Chip)

RX
(Deserializer-Chip)

Bildpunktdaten für die
Farbinformation
(fehlerbehaftet)

Parameter der Bildrahmeninformation
(fehlerbehaftet)

FIG. 4

**Europäisches Patentamt**

**EUROPÄISCHER RECHERCHENBERICHT**

Nummer der Anmeldung

EP 07 02 4294

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/190668 A1 (PAIK WON-KYU [KR] ET AL) 30. September 2004 (2004-09-30) | 1-6 | INV.<br>H04N7/52<br>H04N7/56<br>H04N5/08 |
| A | | 7-15 | |
| X | US 2001/007476 A1 (HONG SUNG RYONG [KR] ET AL) 12. Juli 2001 (2001-07-12) | 1-6 | |
| A | * Zusammenfassung; Abbildungen 1-5 *<br>* Absätze [0011] - [0020], [0024] - [0032], [0045] - [0061] * | 7-15 | |
| X | US 6 069 667 A (UEDA KAZUYA [JP] ET AL) 30. Mai 2000 (2000-05-30)<br>* das ganze Dokument * | 1-4 | |
| Y | EP 0 963 120 A (GEN INSTRUMENT CORP [US]) 8. Dezember 1999 (1999-12-08)<br>* das ganze Dokument * | 7-15 | |
| Y | WO 97/41664 A (PHILIPS ELECTRONICS NV [NL]; PHILIPS NORDEN AB [SE] PHILIPS ELECTRONIC) 6. November 1997 (1997-11-06)<br>* das ganze Dokument * | 7-15 | |
| A | WO 2004/102219 A (GRASS VALLEY U S INC [US]; CIARDI JOHN JOSEPH [US]) 25. November 2004 (2004-11-25)<br>* das ganze Dokument * | 1-15 | RECHERCHIERTE SACHGEBIETE (IPC)<br><br>H04N |
| A | US 2002/003840 A1 (UEDA YOSHIHIRO [JP] ET AL) 10. Januar 2002 (2002-01-10)<br>* das ganze Dokument * | 1-15 | |

Der vorliegende Recherchenbericht wurde für alle Patentansprüche erstellt

| Recherchenort | Abschlußdatum der Recherche | Prüfer |
|---|---|---|
| München | 14. März 2008 | Brandenburg, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

# EP 1 944 981 A1

**ANHANG ZUM EUROPÄISCHEN RECHERCHENBERICHT
ÜBER DIE EUROPÄISCHE PATENTANMELDUNG NR.**

EP 07 02 4294

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-03-2008

| Im Recherchenbericht angeführtes Patentdokument | Datum der Veröffentlichung | Mitglied(er) der Patentfamilie | Datum der Veröffentlichung |
|---|---|---|---|
| US 2004190668 A1 | 30-09-2004 | JP 2004242325 A<br>KR 20040070920 A | 26-08-2004<br>11-08-2004 |
| US 2001007476 A1 | 12-07-2001 | KR 20010069142 A | 23-07-2001 |
| US 6069667 A | 30-05-2000 | CA 2251799 A1<br>CN 1216191 A<br>JP 10224338 A<br>WO 9836558 A1 | 20-08-1998<br>05-05-1999<br>21-08-1998<br>20-08-1998 |
| EP 0963120 A | 08-12-1999 | CN 1237854 A<br>JP 2000041225 A<br>KR 20000005800 A<br>TW 416238 B<br>US 6108046 A | 08-12-1999<br>08-02-2000<br>25-01-2000<br>21-12-2000<br>22-08-2000 |
| WO 9741664 A | 06-11-1997 | DE 69729718 D1<br>DE 69729718 T2<br>EP 0865696 A2<br>JP 3694529 B2<br>JP 11509706 T<br>US 5767917 A | 05-08-2004<br>07-07-2005<br>23-09-1998<br>14-09-2005<br>24-08-1999<br>16-06-1998 |
| WO 2004102219 A | 25-11-2004 | BR PI0410187 A<br>CA 2523944 A1<br>CN 1993998 A<br>EP 1658513 A2<br>JP 2007515844 T<br>KR 20060009910 A | 31-10-2006<br>25-11-2004<br>04-07-2007<br>24-05-2006<br>14-06-2007<br>01-02-2006 |
| US 2002003840 A1 | 10-01-2002 | JP 3916382 B2<br>JP 2002027462 A<br>US 2006088108 A1 | 16-05-2007<br>25-01-2002<br>27-04-2006 |

EPO FORM P0461

Für nähere Einzelheiten zu diesem Anhang : siehe Amtsblatt des Europäischen Patentamts, Nr.12/82